Europäisches Patentamt

European Patent Office

Office européen des brevets

(11) Numéro de publication: **0 114 006**
**A2**

(12) # DEMANDE DE BREVET EUROPEEN

(21) Numéro de dépôt: **83402164.4**

(51) Int. Cl.³: **G 03 B 21/10**

(22) Date de dépôt: **08.11.83**

(30) Priorité: **13.12.82 FR 8220851**

(71) Demandeur: **PRESTINOX S.A. Société Anonyme dite:, 31 à 35 Route de Tremblay Boîte Postale No 5, F-93420 Villepinte (FR)**

(43) Date de publication de la demande: **25.07.84**
**Bulletin 84/30**

(72) Inventeur: **Bodier, Jacques, 6, rue Hameau des Herables, F-77410 Claye-Souilly (FR)**

(84) Etats contractants désignés: **AT BE CH DE FR GB IT LI LU NL SE**

(74) Mandataire: **Bruder, Michel, 10 rue de la Pépinière, F-75008 Paris (FR)**

(54) **Meuble pour la projection directe et la rétroprojection de diapositives ou de films cinématographiques.**

(57)   Un meuble conçu pour la projection directe ou la rétroprojection de diapositives ou de films cinématographiques contient plusieurs surfaces réfléchissantes (12, 19, 21) pour réfléchir le faisceau lumineux issu d'un projecteur (9, 11).

   Pour facilitier la rétroprojection le projecteur (9, 11) est placé au sommet du meuble sur une tablette horizontale (8) située au-dessus de l'écran de rétroprojection (18) montée mobile, à coulissement ou pivotement, et sur laquelle est également fixée la première surface réfléchissante (12).

**1**

La présente invention concerne un meuble conçu pour la projection directe et la rétroprojection de diapositives ou de films cinématographiques.

On connaît déjà des meubles prévus pour la rétroprojection de diapositives ou de films cinématographiques. Ces meubles comportent généralement un support horizontal disposé à l'intérieur du meuble et sur lequel est placé un projecteur de diapositives ou de films cinématographiques orienté perpendiculairement à la face frontale du meuble.Le meuble présente en outre, sur sa face antérieure, un écran de rétroprojection vertical et des surfaces réfléchissantes sont disposées à l'intérieur du meuble de manière à réfléchir, en direction de l'écran, le faisceau lumineux issu du projecteur. Un tel meuble est décrit par exemple dans le brevet français 2 280 917.

Ces meubles connus présentent un certain nombre d'inconvénients. En premier lieu ils sont conçus uniquement pour assurer une rétroprojection et ils ne permettent pas de réaliser d'une manière commode une projection sur grand écran, au moyen du projecteur logé dans le meuble. Par ailleurs, ces meubles comportent, pour assurer la réflexion du faisceau lumineux issu du projecteur, deux surfaces réfléchissantes parallèles ou perpendiculaires, ce qui exige de prévoir une disposition complémentaire pour assurer la rétroprojection de l'image en position directe. Cette disposition complémentaire peut consister à prévoir additionnellement un système optique assurant le retournement de l'image réelle fournie par le projecteur, ou bien elle impose la nécessité de retourner préalablement chaque diapositive dans le panier passe-vues.

La présente invention vise à remédier à ces inconvénients en procurant un meuble de conception particulièrement simple, permettant d'assurer aussi bien une projection directe qu'une rétroprojection de diapositives ou de films cinématographiques et ce éventuellement en combinaison avec une sonorisation assurée par les éléments d'une chaîne haute fidélité incorporés dans le meuble.

2

A cet effet ce meuble conçu pour la projection directe ou la rétroprojection de diapositives ou de films cinématographiques, comportant un support horizontal disposé à l'intérieur du meuble et sur lequel est placé un projecteur de diapositives ou films cinématographiques tourné vers la face postérieure du meuble et d'axe perpendiculaire à celle-ci, un écran de rétroprojection vertical monté sur la face antérieure du meuble et, à l'intérieur de celui-ci, des surfaces réfléchissantes assurant la réflexion du faisceau lumineux issu du projecteur en direction de l'écran, ces surfaces réfléchissantes étant en nombre impair au moins égal à trois et comprenant une première surface réfléchissante supérieure interposée sur le trajet du faisceau lumineux issu du projecteur, entre celui-ci et la face postérieure du meuble, une deuxième surface réfléchissante inférieure située à un niveau inférieur à celui de l'écran et proche de la face antérieure du meuble et une troisième surface réfléchissante intermédiaire située en arrière de l'écran et près de la face postérieure du meuble, ces trois surfaces réfléchissantes ayant des positions et inclinaisons telles que le faisceau lumineux issu du projecteur soit réfléchi successivement sur les première, deuxième et troisième surfaces réfléchissantes pour tomber sur l'écran en formant sur celui-ci une image réelle en position normale, est caractérisé en ce que le projecteur est placé au sommet du meuble sur une tablette horizontale située au-dessus de l'écran de rétroprojection, montée mobile,à coulissement ou pivotement, et sur laquelle est également fixée la première surface réfléchissante.

Suivant uneautre caractéristique de l'invention la partie supérieure de la face postérieure du meuble est percée, au niveau du projecteur, d'un trou situé dans l'axe de celui-ci et suffisamment large pour laisser sortir le faisceau lumineux issu du projecteur, et la première surface réfléchissante est montée amovible de manière à pouvoir être enlevée du trajet du faisceau lumineux issu du projecteur lors d'une projection directe.

3

La partie inférieure du meuble peut comporter plusieurs étagères pour permettre le rangement des éléments consitutifs d'une chaîne haute fidélité.

Suivant une autre caractéristique complémentaire de l'invention le projecteur situé à la partie supérieure du meuble est connecté à la chaîne haute fidélité de manière à reproduire par voie sonore, au cours de la projection, un texte ou une musique préalablement enregistrés sur cassettes, disques, etc.

Le meuble suivant l'invention peut également comporter, au-dessus ou en dessous de l'écran de rétroprojection, un dispositif d'affichage permettant d'indiquer visuellement une légende correspondant à la diapositive ou au film projeté sur l'écran.

On décrira ci-après, à titre d'exemple non limitatif, une forme d'exécution de la présente invention, en référence au dessin annexé sur lequel :

La figure 1 est une vue en coupe verticale et longitudinale d'un meuble de projection et rétroprojection suivant l'invention, en service pour la rétroprojection de diapositives.

La figure 2 est une vue en coupe similaire à celle de la figure 1, le meuble étant représenté en position hors service.

La figure 3 est une vue en coupe verticale de la partie supérieure du meuble utilisé pour la projection directe de diapositives.

La figure 4 est une vue en coupe verticale partielle du meuble utilisé pour la rétroprojection d'un film cinématographique.

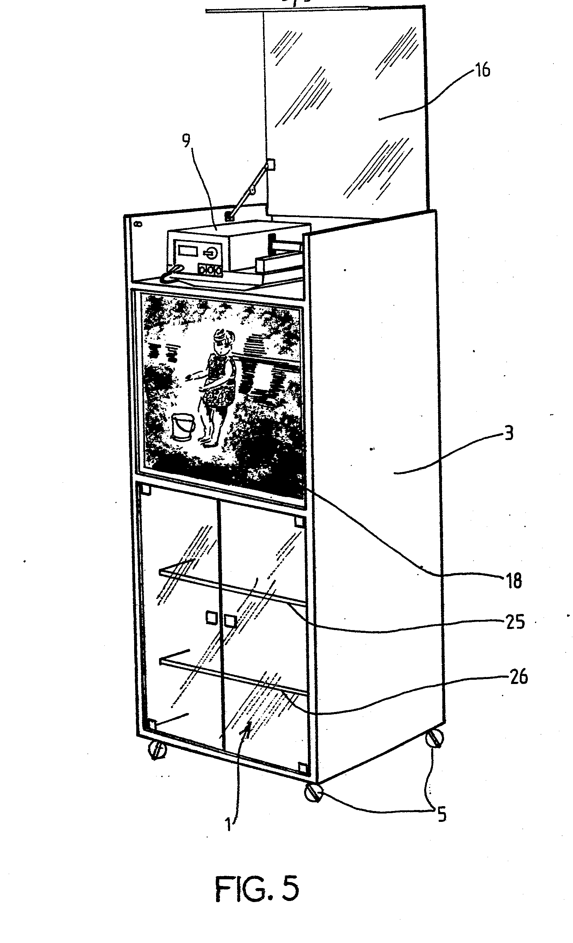

La figure 5 est une vue en perpective du meuble suivant l'invention.

Le meuble suivant l'invention représenté sur le dessin a une forme paralélèpipédique et comprend une face antérieure 1, une face postérieure 2, deux faces latérales 3 et un fond 4 reposant sur le sol par l'intermédiaire de roulettes 5.

4

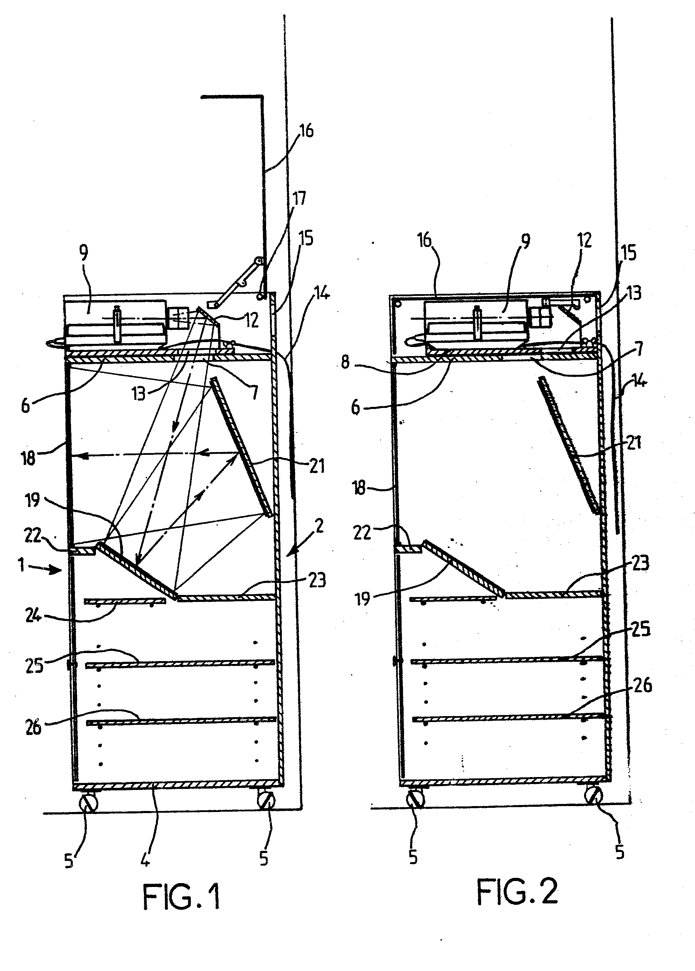

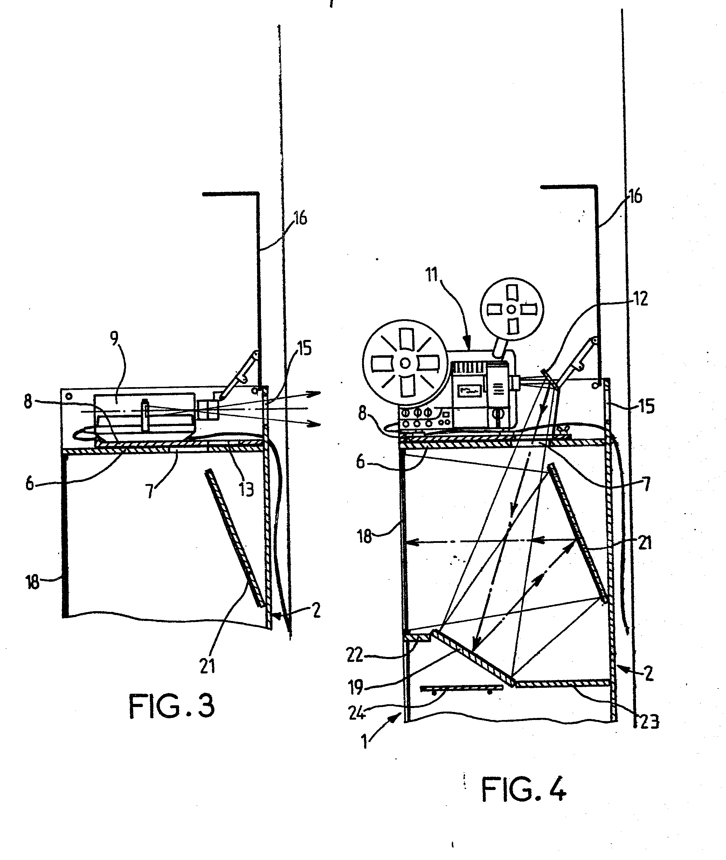

A sa partie supérieure le meuble comporte une étagère horizontale 6 s'étendant sur toute la section droite du meuble et qui est percée d'une ouverture 7. Sur cette étagère supérieure 6 est montée une tablette 8 constituant un support pour un projecteur de diapositives 9 (figures 1 à 3) ou de films cinématographiques 11 (figure 4). La tablette 8 peut être montée coulissante dans le sens longitudinal, c'est-à-dire perpendiculairement aux faces antérieure 1 et postérieure 2, comme il est représenté sur le dessin, ou encore pivotante.

La tablette mobile 8 porte, en avant de l'objectif du projecteur 9 ou 11, un premier miroir 12 qui est amovible et réglable. Ce premier miroir 12 constitue une surface réfléchissante destinée à réfléchir le faisceau lumineux 11 issu du projecteur 9 ou 11 vers le bas, à travers un trou 13 ménagé dans la tablette mobile 8 et le trou 7 de l'étagère supérieure 6, comme on peut le voir sur la figure 1, lorsque le meuble est utilisé en rétroprojection.

Le projecteur 9 ou 11 est relié par un cordon d'alimentation électrique 14 au réseau de distribution électrique, ce cordon 14 passant à travers un trou percé dans la face postérieure 2 du meuble. Cette face postérieure 2 est percée, dans sa partie supérieure, d'une ouverture 15 qui est située dans l'axe du projecteur 9 ou 11 et qui est suffisamment grande pour laisser passer le faisceau lumineux du projecteur, lorsque le meuble est utilisé en projection directe (figure 3).

La partie supérieure du meuble est obturée par un couvercle 16 qui est articulé autour d'un axe horizontal et transversal 17 et qui peut être rabattu par dessus le projecteur de diapositives 9, lorsque le meuble est hors service comme il est représenté sur la figure 2.

Le meuble suivant l'invention comporte également, sur sa face antérieure 1 et juste en dessous de l'étagère supérieure 6, un écran de rétroprojection 18, en verre dépoli par exemple. Par ailleurs le meuble contient à l'intérieur deux autres miroirs 19 et 21 qui sont inclinés par rapport à l'horizontale. Le deuxième miroir inférieur 19 est

5

situé près de la face antérieure 1, à un niveau inférieur à l'écran 18, et il est incliné de haut en bas et d'avant en arrière. Ce deuxième miroir 19 est maintenu dans cette position par deux étagères à savoir une étagère supérieure 22 de petite largeur et une étagère postérieure 23 de plus grande largeur, ces deux étagères s'étendant entre les deux faces latérales 3 du meuble.

Le troisième miroir 21 est situé près de la face postérieure 2 du meuble et il est incliné de haut en bas et d'avant en arrière, son angle d'inclinaison étant supérieur à celui du deuxième miroir 19. Le troisième miroir 21 est situé au niveau de l'ècran de rétroprojection 18.

Les inclinaisons et les positions relatives des trois miroirs 12, 19 et 21 sont choisies de telle manière qu'en service, ainsi qu'il est représenté sur les figures 1 et 4, le faisceau lumineux issu du projecteur de diapositives 9 ou de films cinématographiques 11 qui tombe sur le premier miroir 12, soit réfléchi par celui-ci vers le deuxième miroir inférieur 19, puis par celui-ci vers le troisième miroir intermédiaire 21 et enfin par ce dernier vers l'écran de rétroprojection 18 en assurant ainsi la formation, sur celui-ci, d'une image directe et agrandie.

Comme on l'a vu précédemment le premier miroir 12 est monté sur un support réglable de manière à pouvoir être situé à des hauteurs différentes suivant que le projecteur utilisé est un projecteur de diapositives 9 ou un projecteur de films cinématographiques 11.

Le miroir 12 peut être également totalement escamoté lorsqu'on désire utiliser le meuble suivant l'invention pour une projection directe comme il est illustré sur la figure 3. Dans ce cas ce premier miroir 12 est simplement enlevé et le projecteur 9 ou 11 peut être utilisé pour une projection directe à travers l'ouverture 15 prévue dans la face postérieure 2.

Dans sa partie inférieure le meuble comporte, en dessous du deuxième miroir inférieur 19, une tablette fixe 24, située dans le même plan que l'étagère postérieure 23, ainsi que d'autres tablettes amovibles 25, 26. Ces tablettes

0114006

6

peuvent servir au rangement de divers accessoires tels que boîtes de magasins de diapositives ou encore elles peuvent supporter des éléments d'une chaîne haute fidélité. Dans ce dernier cas il est possible de synchroniser la projection d'une diapositive ou d'un film cinématographique avec une émission sonore telle qu'un texte ou une musique, enregistrés préalablement sur une bande magnétique, un disque etc.

Suivant une variante de réalisation la tablette 8 portant le projecteur 9 ou 11 pourrait être montée pivotante sur l'étagère supérieure 6. Cette disposition permettrait alors de projeter les diapositives ou les films cinématographiques directement vers l'avant, sans avoir à retourner le meuble.

Le meuble suivant l'invention peut également comporter, dans sa paroi antérieure 1, au-dessus ou en dessous de l'écran de rétroprojection 18, un dispositif d'affichage permettant d'indiquer visuellement une légende appropriée correspondant à la diapositive ou au film projeté sur l'écran 18 par le projecteur 9 ou 11. Ce dispositif d'affichage peut être de tout type connu, par exemple à cristaux liquides, et il peut afficher un message fixe ou défilant au fur et à mesure de la projection des diapositives ou du film. Ce dispositif d'affichage est alors connecté à un émetteur de signaux électriques codés correspondants logé à l'intérieur du meuble et dont le fonctionnement est synchronisé avec celui du projecteur 9 ou 11.

7

REVENDICATIONS

1- Meuble conçu pour la projection directe ou la rétroprojection de diapositives ou de films cinématographiques, comportant un support horizontal (6) disposé à l'intérieur du meuble et sur lequel est placé un projecteur de diaposi tives ou films cinématographiques (9,11) tourné vers la face postérieure (2) du meuble et d'axe perpendiculaire à celle-ci, un écran de rétroprojection vertical (18) monté sur la face antérieure (1) du meuble et, à l'intérieur de celui-ci, des surfaces réfléchissantes(12,19,21) assurant la réflexion du faisceau lumineux issu du projecteur (9,11) en direction de l'écran (18), ces surfaces réfléchissantes étant en nombre impair au moins égal à trois et comprenant une première surface réfléchissante (12) supérieure interposée sur le trajet du faisceau lumineux issu du projecteur, entre celui-ci et la face postérieure (2) du meuble, une deuxième surface réfléchissante inférieure (19) située à un niveau inférieur à celui de l'écran (18) et proche de la face antérieure (1) du meuble et une troisième surface réfléchissante (21) intermédiaire située en arrière de l'écran (18) et près de la face postérieure (2) du meuble, ces trois surfaces réfléchissantes ayant des positions et inclinaisons telles que le faisceau lumineux issu du projecteur (9,11) soit réfléchi successivement sur les première, deuxième et troisième surfaces réfléchissantes (12,19,21) pour tomber sur l'écran (18) en formant sur celui-ci une image réelle en position normale, caractérisé en ce que le projecteur (9,11) est placé au sommet du meuble sur une tablette horizontale (8) située au-dessus de l'écran de rétroprojection (18), montée mobile,à coulissement ou pivotement, et sur laquelle est également fixée la première surface réfléchissante (12).

2- Meuble suivant la revendication 1 caractérisé en ce que la partie supérieure de la face postérieure (2) du meuble est percée, au niveau du projecteur (9,11) , d'un trou (15) situé dans l'axe de celui-ci et suffisamment large pour laisser sortir le faisceau lumineux issu du projecteur, et la première surface réfléchissante (12) est

8

montée amovible, sur la tablette (8), de manière à pouvoir être enlevée du trajet du faisceau lumineux issu du projecteur (9,11) lors d'une projection directe.

3- Meuble suivant l'une quelconque des revendications précédentes caractérisé en ce que la première surface réfléchissante (12) est montée réglable en hauteur sur la tablette (8).

4- Meuble suivant l'une quelconque des revendications précédentes caractérisé en ce que la partie inférieure du meuble comporte plusieurs étagères (25,26) pour permettre le rangement des éléments consitutifs d'une chaîne haute fidélité et le projecteur(9,11) situé à la partie supérieure du meuble est connecté à la chaîne haute fidélité de manière à reproduire par voie sonore, au cours de la projection, un texte ou une musique préalablement enregistrés sur cassettes, disques, etc.

5- Meuble suivant l'une quelconque des revendications précédentes caractérisé en ce qu'il comporte, sur la face antérieure (1), au-dessus ou en dessous de l'écran de rétroprojection (18), un dispositif d'affichage d'une légende correspondant à la diapositive ou au film projeté sur l'écran (18) par le projecteur (9,11), ce dispositif d'affichage étant connecté à un émetteur de signaux codés logé à l'intérieur du meuble et fonctionnant en synchronisme avec le projecteur (9,11).

FIG.1

FIG.2

0114006

FIG.3

FIG.4

0114006

FIG. 5